Europäisches Patentamt

(19) European Patent Office

Office européen des brevets

(11) Publication number: **0 094 616**
**B1**

(12) **EUROPEAN PATENT SPECIFICATION**

(45) Date of publication of patent specification: **19.08.87**

(21) Application number: **83104650.3**

(22) Date of filing: **11.05.83**

(51) Int. Cl.⁴: **F 16 J 15/08**

(54) **Single metallic plate gasket.**

(30) Priority: **17.05.82 JP 81531/82**
**17.05.82 JP 81530/82**

(43) Date of publication of application:
**23.11.83 Bulletin 83/47**

(45) Publication of the grant of the patent:
**19.08.87 Bulletin 87/34**

(84) Designated Contracting States:
**DE FR GB IT**

(56) References cited:
**DE-C- 862 536**
**FR-A-1 219 701**
**GB-A- 954 327**
**GB-A-1 033 507**
**GB-B- 697 854**

(73) Proprietor: **NIHON METAL GASKET KABUSHIKI KAISHA**
**168-2, Mamiya**
**Urawa-shi Saitama-ken (JP)**

(72) Inventor: **Yoshino, Nobuo**
**31-5, Nishidai 1-chome**
**Itabashi-ku Tokyo (JP)**

(74) Representative: **Klingseisen, Franz, Dipl.-Ing. et al**
**Dr. F. Zumstein sen. Dr. E. Assmann Dr. F. Zumstein jun. Dipl.-Ing. F. Klingseisen Bräuhausstrasse 4**
**D-8000 München 2 (DE)**

## Description

The invention relates to a metallic gasket according to the preamble of claim 1.

A metallic gasket of such type is known from FR—A—1 219 701 or GB—A—1 033 507. With the known gaskets the rough surface is formed by either providing grooves in the surface of the metallic base plate or by treating the surface of the metallic base plate by sand blasting or etching.

A metallic gasket comprising a single metallic base plate having elasticity said base plate having a bead and also having a microseal layer formed on the surface thereof is furthermore known from GB—B—697854, GB—A—954327 and DE—C—862536.

A metallic gasket formed of a thin metallic plate having elasticity in which a convexed or stepped bead is formed to thereby provide an efficient seal in a joint area, for example, between the cylinder head and the cylinder block of an internal combustion engine, has already been suggested which comprises a laminate of a total of three plates, one being a metallic base plate having an elasticity and the other two being sub-plates formed of a soft metal laminated to both the surface and the back of the base plate, wherein the cylinder block and the cylinder head are brought into close contact with each other while forming seal lines on their deck surfaces or joint surfaces by virtue of a bolt tightening force for the two components, thereby attaining a superior sealing effect. However, since such metallic gasket is composed of a single base plate and two sub-plates not only its construction is complicated but also its material and manufacturing costs are high.

It is the object of the present invention to provide a metallic gasket of the above mentioned type having a simple construction and a good sealing performance which can be obtained under low manufacturing costs.

This object of the present invention is obtained by the features in the characterizing part of claim 1.

The metallic gasket according to the present invention is constituted by a single base plate whereby irregular portions of a joint surface caused by heat distortion, tool marks, flaws etc. can be compensated through the microseal layer and whereby a sliding motion of bead is permitted to assure a satisfactory seal. By forming a rough surface on either or both sides of the base plate by plating and applying a sealing material over the rough surface to form the microseal layer it is possible to realize a strong adhesion of the sealing material to the extent that the sealing material does not become separated from the base plate. In this way a metallic gasket having an extreme simple construction can be obtained at low manufacturing costs.

Additionally, since the microseal layer is provided, there is no fear of direct contact of the hard base plate with a soft joint surface as a surface to be sealed and hence no fear of damage of such surface. Furthermore, if the spring constant is set small, the gasket, despite of a single plate construction thereof, can maintain a high sealing effect over a long period of use without the fear of the cylinder head or cylinder block surface being damaged by an urging force of bead. Moreover, since the gasket is a single, thin, metallic gasket, the gap between the joint surface of the cylinder head and that of the cylinder block can be narrowed, thereby improving heat conductivity and permitting a uniform distribution of heat and a good heat dissipation. Additionally, because of a single plate construction of this metallic gasket, it is easy to set small the spring constant as mentioned above, and the face pressure based on seal line can be set not higher than 400 kg/cm² when the gasket is compressed by virtue of a bolt tightening force, so that there is no fear of a joint surface as a surface to be sealed being concaved and damaged to cause leakage.

Brief Description of the Drawings

Fig. 1 is a plan view of a single metallic plate gasket according to an embodiment of the present invention;

Fig. 2 is a sectional view taken on line II—II of Fig. 1;

Fig. 3 is an enlarged sectional view of the portion indicated with an arrow III in Fig. 2;

Fig. 4 is a longitudinally sectional side view of a principal portion of an internal combustion engine; and

Fig. 5 is a partially enlarged side view of the single metallic plate gasket, showing a state of use of the gasket.

Description of a Preferred Embodiment

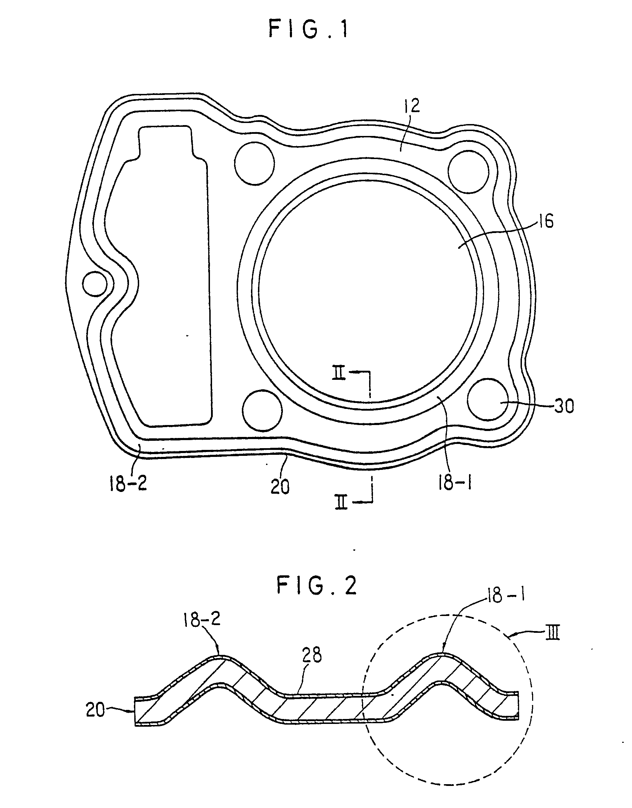

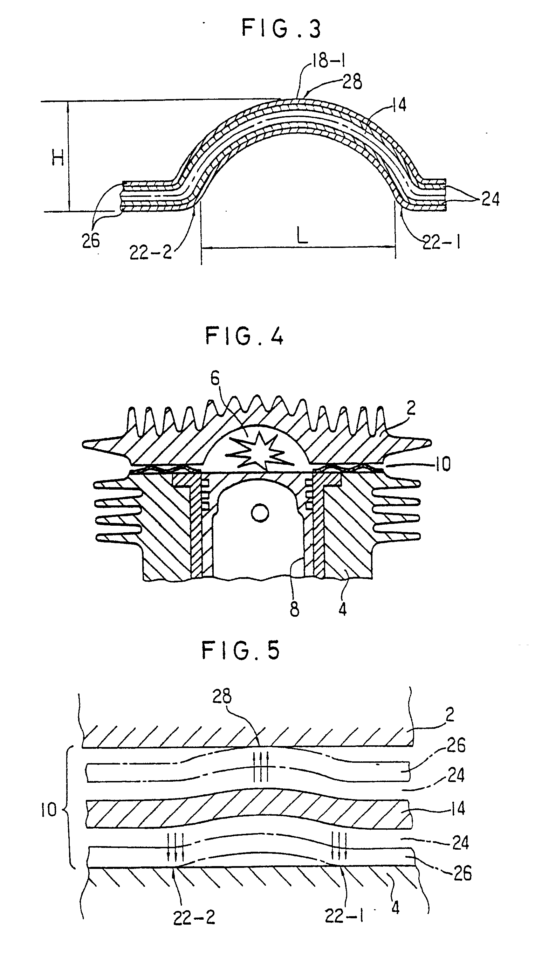

An embodiment of the present invention will be described below in detail and concretely with reference to the accompanying drawings consisting of Figs. 1 through 5 which show such embodiment of the invention. In Fig. 4, the reference numeral 2 denotes a cylinder, 4 a cylinder block, 6 a combustion chamber and 8 a piston. The cylinder head 2 and the cylinder block 4 have so-called deck surfaces or joint surfaces 10, between which is interposed a gasket to provide a seal in this joint area. That is, a single metallic gasket 12 according to the present invention is disposed therein.

In forming the single metallic plate gasket 12, first a thin metallic plate having elasticity and preferably having a small spring constant is selected as a base plate 14 of the gasket 12. More particularly, as the base plate 14 there is used, for example, a thin metallic plate having a small spring constant so that a good sealing effect may be exhibited against a surface to be sealed with which it is brought into contact and so that the cylinder head side formed of an aluminum material may not be concaved. It is necessary that the face pressure of the bead portion against a surface to be sealed in the tightening operation for close adhesion be not higher than 400 kg/cm².

In this embodiment, in order to attain a small spring constant, there is selected a thin stainless spring steel having a thickness in the range of 0.10 to 0.25 mm. The hardness of this spring steel may be in the range of 250 to 500, preferably 300 to 450 and most preferably $400 \pm 30$, in terms of Vickers hardness. And as shown in Fig. 1, on the base plate 14 are formed a bead 18-1 surrounding a cylinder bore 16 and a bead 18-2 along an outer peripheral edge 20. In forming the beads 18-1 and 18-2, it is preferable that the bead width L be made sufficiently larger than the bead height H in order to make the spring constant smaller, as shown in Fig. 3. More particularly, the bead width L which corresponds to the distance between end portions 22-1 and 22-2 of the bead is made larger than the convexed bead height H having a sectional shape projecting toward the cylinder head 2, to attain a smaller spring constant. Then, both the surface and the back of the base plate 14 thus formed with the beads 18-1 and 18-2 are plated with zinc to form plating layers 24 having a rough surface. Onto the rough surface of each plating layer 24 is applied a sealing material 26 such as a coating material or the like having flexibility and resistance to heat not lower than 200°C to form a microseal layer. In this embodiment, the plating thickness and the sealing material thickness are set at not greater than 7 μ and not greater than 50 μ, respectively. By this microseal layer formed by the application of the sealing material 26 it is made possible to compensate and absorb irregular portions of the joint surface 10 caused by tool marks, flaws, etc. to thereby provide a microseal. Moreover, by the presence of the sealing material 26, the sliding between the joint surface 10 and the metallic gasket 12 is improved to prevent distortion in the lateral direction (i.e. the direction parallel to the joint surface 10) of the bead 18-1, whereby an ideal sealing effect can be attained. Indicated at 28 is a top portion and at 30 is a bolt hole.

On a flange which comprises a cast iron sleeve, even if the face pressure of the bead portion is set not lower than 500 kg/cm², there occurs no inconvenience, that is, a concave will not be formed, and therefore the bead is formed so that the end portions 22-1 and 22-2 are on the cast iron sleeve side, i.e. on the cylinder block side, as shown in Fig. 3. That is, the end portions 22-1 and 22-2 are more likely to form an acute angle, provide a higher sealing face pressure and damage the surface to be sealed, than the top portion 28 of the bead.

The operation of the present invention having the above-described construction will now be described. The single metallic plate gasket 12 disposed in the joint area 10 between the cylinder head 2 and the cylinder block 4 is compressed by the bolt tightening force, so that the top portion 28 of the bead becomes a gently curved surface, as shown in Fig. 5. By virtue of this compressive force, a face pressure based on seal line is exerted on the cylinder head 2, and at the same time a like pressure is exerted on the cylinder block 4 at the end portions 22-1 and 22-2 of the bead. Furthermore, because of formation of the plating layer 24 on both the surface and the back of the base plate 14, the adhesion of the sealing material is improved, and the plating layer 24 and the sealing material 26, especially the latter, are sure to compensate for irregular portions of the joint surface 10 caused by heat distortion, tool marks, flaws, etc. and exhibit an effective sealing performance. Additionally, by the presence of the sealing material 26, the hard base plate 14 is prevented from directly abutting one surface to be sealed, namely, the deck surface of the cylinder head 2 formed of an aluminum material or the like, that is, the relatively soft surface of the cylinder head 2 can be prevented from being damaged. The sealing material 26 also functions to permit sliding and improve fitting relative to the joint surface 10. The same can be said also of the deck surface of the cylinder block 4.

It goes without saying that the present invention is not limited thereto and that various changes and modifications may be made. Furthermore, although in the above embodiment both sides of the base plate are roughened by plating and the sealing material is applied onto such rough plated surfaces, the present invention may be applied to only one side of the base plate which side requires application of the invention more than the other side of the base plate, for example, only the upper surface of the base plate opposed to the cylinder head surface, whereby a good sealing effect can be attained.

Moreover, as the metallic plate having a small spring constant there may be used a thin metallic plate.

Further, as the rough surface formed on the base plate, there may be formed a fine uneven surface which permits an easy adhesion thereto of the sealing material, and this rough surface may be formed by an anti-glare treatment such as a surface treatment by etching or by mechanical means.

In applying the sealing material onto the base plate, if a material of high adherability is used as the sealing material, it is not necessary to roughen the base plate surface.

**Claims**

1. A metallic gasket comprising a single metallic base plate (14) having elasticity, said base plate (14) having a bead (18-1, 18-2) and also having a microseal layer formed on the surface thereof by first forming a rough surface and then applying a coating material (26) onto said rough surface, characterized in that on either or both sides of the base plate (14) a plating layer (24) is provided having a rough surface onto which the coating material (26) is applied.

2. A metallic gasket according to claim 1, characterized in that the plating layer (24) consists of zinc.

## Patentansprüche

1. Metallische Dichtung mit einer einzelnen metallischen Grundplatte (14), die elastisch ist, eine Sicke (18-1, 18-2) und auch eine Mikrodichtschicht aufweist, die auf deren Oberfläche durch Ausbildung zunächst einer rauhen Fläche und danach Aufbringen eines Überzugsmaterials (26) auf diese rauhe Fläche ausgebildet ist, dadurch gekennzeichnet, daß auf einer oder beiden Seiten der Grundplatte (14) eine Plattierungsschicht (24) mit einer rauhen Oberfläche vorgesehen ist, auf der das Überzugsmaterial (26) aufgebracht ist.

2. Metallische Dichtung nach Anspruch 1, dadurch gekennzeichnet, daß die Plattierungsschicht (24) aus Zink besteht.

## Revendications

1. Joint d'étanchéité métallique comprenant une seule feuille métallique de base (14) douée d'élasticité, ladite feuille de base (14) comportant un relief ou cordon (18-1, 18-2), ainsi qu'une couche de microjonction ou microjoint formée à sa surface en formant d'abord une surface rugueuse, puis en appliquant une matière de recouvrement (26) sur ladite surface rugueuse, caractérisé en ce qu'il est prévu sur l'une ou chacune des deux faces de la feuille de base (14) une couche de métallisation (24) présentant une surface rugueuse sur laquelle la matière de recouvrement (26) est appliquée.

2. Joint métallique selon la revendication 1, caractérisé en ce que la couche de métallisation (24) est constituée par du zinc.

0 094 616

# FIG.1

# FIG.2

FIG.3

FIG.4

FIG.5

2